Europäisches Patentamt

European Patent Office

Office européen des brevets

(11) Veröffentlichungsnummer: **0 253 819**
**B1**

(12) **EUROPÄISCHE PATENTSCHRIFT**

(45) Veröffentlichungstag der Patentschrift:
**20.09.89**

(21) Anmeldenummer: **86903304.3**

(22) Anmeldetag: **29.04.86**

(86) Internationale Anmeldenummer:
**PCT/EP 86/00255**

(87) Internationale Veröffentlichungsnummer:
**WO/8606680 (20.11.86 Gazette 86/25)**

(51) Int. Cl.⁴: **B 29 C 49/48**

(54) **LÄNGENVERSTELLBARE BLASFORM.**

(30) Priorität: **06.05.85 DE 3516175**

(43) Veröffentlichungstag der Anmeldung:
**27.01.88 Patentblatt 88/04**

(45) Bekanntmachung des Hinweises auf die Patenterteilung: **20.09.89 Patentblatt 89/38**

(84) Benannte Vertragsstaaten:
**AT BE CH DE FR GB IT LI LU NL SE**

(56) Entgegenhaltungen:
**FR–A– 1 570 097**
**FR–A– 2 110 204**
**FR–A– 2 171 930**
**GB–A– 1 004 314**
**US–A– 3 354 509**
**US–A– 3 570 057**
**US–A– 3 867 084**

(73) Patentinhaber: **MARTIN RUDOLPH GMBH**
**Industriestrasse 47**
**D-5620 Velbert 1 (DE)**

(72) Erfinder: **RUDOLPH, Martin**
**Industriestrasse 47**
**D-5620 Velbert 1 (DE)**

(74) Vertreter: **Weisse, Jürgen, Dipl.-Phys. et al**
**Patentanwälte Dipl.-Phys. Jürgen Weisse Dipl.-Chem.**
**Dr. Rudolf Wolgast Bökenbusch 41 Postfach 11 03 86**
**D-5620 Velbert 11 Langenberg (DE)**

## Beschreibung

Die Erfindung betrifft eine Blasform zum Blasformen von Behältern, enthaltend eine einteilige Form, ein die Form an einem ersten Ende abschließendes Formoberteil zur Verbindung mit einem Blasdorn, ein an einem Träger abgestütztes, die Form an einem dem ersten gegenüberliegenden zweiten Ende abschließendes Abschlußteil, das relativ zu der einteiligen Form axial beweglich ist, und eine Längseinstellvorrichtung, die an der dem Formoberteil abgewandten Seite an dem Abschlußteil angreift und mittels derer das Abschlußteil auf vorwählbare Längen der einteiligen Form für die Blasformung von Behältern unterschiedlicher Längen einstellbar ist.

Eine bekannte Blasform dieser Art (FR-A-2.110.204) enthält eine rohrförmig ausgebildete, einteilige Form, die an einem Ende durch einen Deckel verschließbar und am anderen Ende auf einer Stützplatte abgestützt ist. Innerhalb der Form befindet sich ein Abschlußteil oder Boden, der einer Längseinstellvorrichtung aufliegt, die ebenfalls an der Stützplatte abgestützt ist. Die Längseinstellvorrichtung besteht aus Zylindern unterschiedlicher Länge, die entsprechend der jeweils gewünschten Behälterlänge in die Form eingesetzt werden. Dazu wird der Deckel der Form entfernt, die Form von der Stützplatte abgehoben und der vorhandene Zylinder gegen einen der gewünschten Formlänge entsprechenden Zylinder ausgetauscht. Anschließend werden die Formteile zur Durchführung der Blasformung wieder zusammengesetzt.

Die Halbformen einer zweiteiligen Ausführung dieser Blasform werden durch Druckmittelzylinder geöffnet und geschlossen und sind an ihren Innenwänden mit Ringnuten versehen, die in bestimmten Axialabständen zueinander angeordnet sind. Der Boden ist mit einer Stange versehen, die sich durch eine Feststelleinrichtung erstreckt. Nach Öffnung der Form wird der Boden in einer Stellung festgestellt, in der dieser Boden zu einer gewählten Ringnut ausgerichtet ist. Nach dem Schließen der Form liegt der Boden am Umfang in dieser Ringnut ein und ist daran abgestützt.

Die bekannte Blasform hat den Nachteil, daß eine Veränderung des Volumens der Blasform nur nach Zerlegung der Blasform in ihre Einzelteile erreicht werden kann.

Durch die US-A-3,570,057 ist es bekannt, geringe Volumabweichungen bei einer Blasform mit integriertem Boden ohne Änderungen im Aussehen der blasgeformten Behälter durch einen Volumen-Einstellring zu kompensieren, der in eine Ringnut im Boden der Blasform eingelassen ist und in seiner Höhe innerhalb der Ringnut durch Stellschrauben und Stellmuttern eingestellt werden kann.

Eine andere bekannte Blasform (DE-PS 1 479 631) besteht aus einer an einem Ende geschlossenen, allgemein zylindrischen Form, die am anderen Ende durch ein mehrteiliges Oberteil verschließbar ist. Ein wesentlicher Nachteil der bekannten Blasform besteht darin, daß mit dieser Blasform nur Behälter einheitlicher Größe bzw. Länge hergestellt werden können.

Die Aufgabe der vorliegenden Erfindung besteht darin, eine Blasform mit einteiliger Form zu schaffen, mit der Behälter unterschiedlicher Größe, insbesondere unterschiedlicher Länge ohne Zerlegung der Blasform in ihre Einzelteile hergestellt werden können.

Erfindungsgemäß wird diese Aufgabe dadurch gelöst daß die Längseinstellvorrichtung mit dem Abschlußteil an der dem Formoberteil abgewandten Seite fest und mit dem Träger kontinuierlich einstellbar verbunden ist, und daß das Abschlußteil mittels der Längseinstellvorrichtung innerhalb der einteiligen Form axial kontinuierlich verstellbar ist.

Die erfindungsgemäße Blasform enthält somit ein innerhalb der einteiligen Form axial verstellbares Abschlußteil, durch dessen axiale Verstellung mit Hilfe der Längseinstellvorrichtung die Form in ihrer Länge kontinuierlich veränderbar ist. Mit Hilfe der erfindungsgemäßen Blasform können daher unterschiedlich lange Behälter und damit Behälter unterschiedlichster Rauminhalte hergestellt werden, ohne daß dazu eine Zerlegung der Form erforderlich ist.

Vorteilhafterweise ist das Abschlußteil forminnenseitig konkav mit einem hochstehenden Rand versehen und einer Außenwand, deren Durchmesser im wesentlichen dem Innendurchmesser der Form gleich ist; der hochstehende Rand verläuft dann in Fortsetzung der Außenwand und die Außenwand tangential zur Krümmung des konkav ausgebildeten hochstehenden Randes.

Bei einer solchen Ausbildung des Abschlußteils wird durch den hochstehenden Rand ein kontinuierlicher Übergang vom Abschlußteil auf die Forminnenwand bewirkt. Dieser kontinuierliche Übergang ist von besonderem Vorteil für den druckdichten Verschluß der längenverstellbaren Form. Weiterhin wird durch den kontinuierlichen Übergang zwischen dem Abschlußteil und der Forminnenwand bewirkt, daß bei der Blasformung von Behältern ein nahtloser Übergang zwischen dem Bodenteil und dem übrigen Teil des Behälters entsteht.

Vorteilhafterweise weist bei der erfindungsgemäßen Blasform die Längseinstellvorrichtung mindestens eine Gewindespindel und mindestens eine mit dem Träger zusammenwirkende Stellmutter auf.

Vorzugsweise, insbesondere zur Verhinderung von Relativverstellungen zwischen der Form und dem Abschlußteil bei hohen Innendrucken, ist die einteilige Form an einem Ende an dem Träger an einer Trägerplatte verankert, die mit Laufrädern auf Schienen läuft. Die mindestens eine Gewindespindel erstreckt sich dann durch die Trägerplatte hindurch, und die zugehörige Stellmutter greift an der Trägerplatte an der dem Abschlußteil abgewandten Seite an.

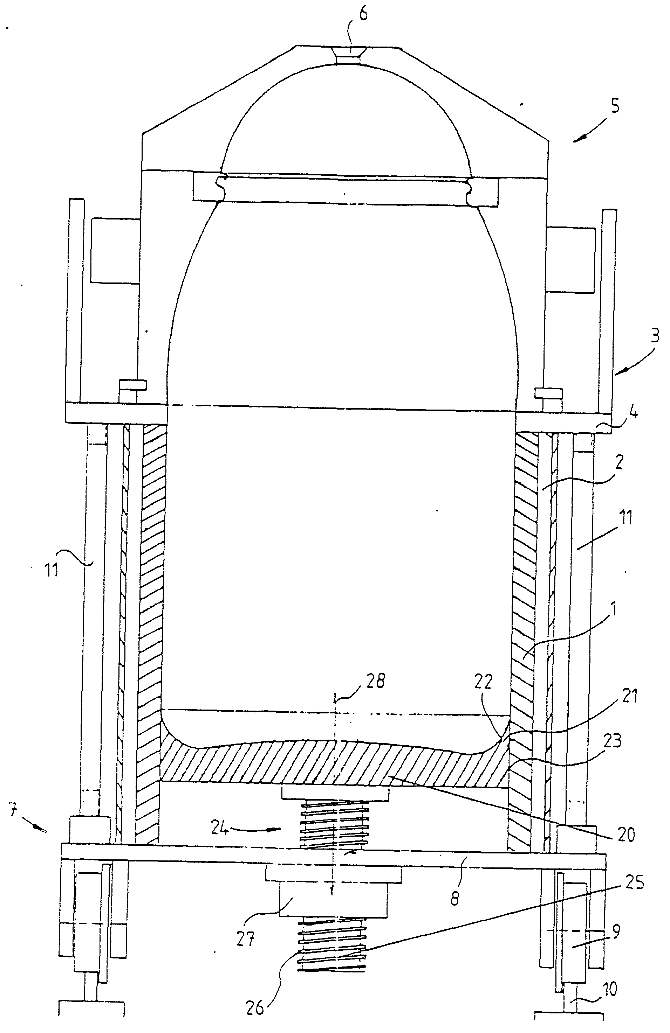

Ein Ausführungsbeispiel der erfindungsgemäßen Blasform ist in der Abbildung schematisch und teilweise im Schnitt dargestellt und wird nachfolgend anhand der Bezugszeichen im einzelnen erläutert und beschrieben.

Die Blasform ist in der Abbildung in ihrer Gesamtheit und teilweise im Längsschnitt dargestellt. Die dargestellte und nachfolgend beschriebene Blasform ist nach Art der Vorrichtung zum Blasformen ausgebildet, die in der eingangs genannten DE-PS 1 479 631 beschrieben ist. Die nachfolgend beschriebene Ausbildung der Blasform ist jedoch nicht an diese Konstruktion gebunden, sondern kann in entsprechender Weise auch bei anderen bekannten Konstruktionen von Blasformvorrichtungen zur Anwendung kommen.

Die in der Abbildung dargestellte Blasform besteht zunächst aus einer allgemein zylindrisch ausgebildeten Form 1, die in ihrer Wandung mit Kühlkanälen 2 versehen ist. Diese Kühlkanäle 2 sind in bekannter und daher nicht besonders dargestellter Weise an Kühlmittelzuleitungen angeschlossen. An einer Seite, in dem dargestellten Beispiel an der Oberseite, ist die Form 1 mit einer Rahmenkonstruktion 3 versehen, von der eine Traverse 4 erkennbar ist. Diese Rahmenkonstruktion 3 trägt das nur schematisch in Ansicht dargestellte, mehrteilige Formoberteil 5. Die Teile des Formoberteils 5 können beispielsweise mit hydraulischen Vorrichtungen so gegeneinander verschoben werden, daß die Form 1 an ihrer Oberseite geschlossen ist und eine Durchtrittsöffnung 6 für den hier nicht dargestellten Blasdorn gebildet wird. Diese Ausbildung der Vorrichtung zum Blasformen ist aus der eingangs genannten Druckschrift bekannt und wird daher hier nicht weiter beschrieben.

Die Form 1 ist an einem Träger 7 angeordnet, der in dem dargestellten Ausführungsbeispiel eine Trägerplatte 8 bildet, die über Laufräder 9 auf Schienen 10 abgestützt ist. Die Trägerplatte 8 ist durch eine Verankerung mit der Rahmenkonstruktion 3 fest verbunden; in der Abbildung sind nur zwei von mehreren Ankern 11 erkennbar, mittels derer die Traverse 4 bzw. die Rahmenkonstruktion 3 und damit die Form 1 an der Trägerplatte 8 verankert ist.

An dem der Rahmenkonstruktion 3 abgewandten Ende, in dem dargestellten Ausführungsbeispiel an der Unterseite, ist die Form 1 durch ein verstellbares Abschlußteil 20 abgeschlossen, das hier ein Bodenteil oder eine Bodenplatte der Form 1 bildet. Das Abschlußteil 20 ist forminnenseitig mit einem hochstehenden Rand 21 versehen, und dieser hochstehende Rand 21 ist konkav mit einer Krümmung 22 ausgebildet. Das Abschlußteil 20 bestimmt weiterhin eine Außenwand 23, deren Durchmesser im wesentlichen dem Innendurchmesser der Form 1 gleich ist. Der hochstehende Rand 21 verläuft in Fortsetzung der Außenwand 23 in der Weise, daß die Außenwand 23 im wesentlichen tangential zur Krümmung 22 des hochstehenden Randes 21 verläuft.

Formaußenseitig greift eine Stelleinrichtung 24 an dem Abschlußteil 20 an. Diese Stelleinrichtung besteht in dem dargestellten Ausführungsbeispiel aus einer Gewindespindel 25 mit einem Gewinde 26 und ist mittig an dem Abschlußteil 20 befestigt. Die Gewindespindel 25 erstreckt sich durch einen nicht dargestellten Durchbruch in der Trägerplatte 8. Unterhalb der Trägerplatte 8 ist eine Stellmutter 27 angeordnet, die mit dem Gewinde 26 der Gewindespindel 25 im Eingriff ist und nur schematisch dargestellt ist. Die Stellmutter 27 kann mit üblichen und daher nicht besonders dargestellten Mitteln so verstellt werden, daß dadurch die durch den Pfeil 28 angedeutete axiale Verstellung des Abschlußteils 20 innerhalb der Form 1 bewirkt werden kann. Es kann aber auch eine Mehrzahl von Gewindespindeln symmetrisch über das Abschlußteil 20 verteilt angeordnet sein, wodurch während der Verstellung Verkantungen des Abschlußteils 20 gegenüber der Form 1 vermieden werden.

Die feste Verankerung der Form 1 an der Trägerplatte 8 durch die mit der Rahmenkonstruktion 3 verbundenen Anker 11 stellt sicher, daß auch bei hohen Innendrücken in der geschlossenen Blasform keine Relativbewegung zwischen der Form 1 und dem Abschlußteil 20 eintreten kann. Die vorstehend beschriebene, besondere Ausbildung des hochstehenden Randes 21 unterstützt den druckdichten Abschluß der Form 1 durch das Abschlußteil 20. Diese Ausbildung des hochstehenden Randes 21 hat den weiteren Vorteil, daß ein nahtloser Übergang zwischen dem Abschlußteil 20 und der Innenwand der Form 1 besteht, so daß der Behälter praktisch ohne Nahtstelle zwischen seinem Bodenteil und den übrigen Teilen des Behälters erzeugt wird.

Der Sinn und Zweck der vorstehend beschriebenen Neuentwicklung besteht in der Schaffung einer Blasform, die es ermöglicht, mit einer einzigen Blasform Behälter der unterschiedlichsten und auch von Normgrößen abweichenden Rauminhalte herzustellen, ohne für jeden Rauminhalt andere oder anders zusammengesetzte Blasformen verwenden zu müssen, wodurch nicht nur eine erhebliche technische Vereinfachung erzielt wird, sondern auch ganz erhebliche Investitionskosten eingespart werden.

## Patentansprüche

1. Blasform zum Blasformen von Behältern, enthaltend eine einteilige Form (1), ein die Form (1) an einem ersten Ende abschließendes Formoberteil (5) zur Verbindung mit einem Blasdorn, ein an einem Träger (7) abgestütztes, die Form (1) an einem dem ersten gegenüberliegenden zweiten Ende abschließendes Abschlußteil (20), das relativ zu der einteiligen Form (1) axial beweglich ist, und eine Längseinstellvorrichtung (24), die an der dem Formoberteil (5) abgewandten Seite an dem Abschlußteil (20) angreift und mittels derer das Abschlußteil auf vorwählbare Längen der einteiligen Form für die Blasformung von Behältern unterschiedlicher Längen einstellbar ist, dadurch gekennzeichnet, daß die Längseinstellvorrichtung (24) mit dem Abschlußteil (20) an der dem Formoberteil (5) abgewandten Seite fest und mit dem Träger (7) kontinuierlich einstellbar verbunden ist, und daß das Abschlußteil (20) mittels der Längseinstellvorrichtung (24) innerhalb der einteiligen Form (1) axial kontinuierlich verstellbar ist.

2. Blasform nach Anspruch 1, dadurch gekennzeichnet, daß das Abschlußteil (20) eine Außenwand (23) bildet, daß der Durchmesser der Außenwand (23) im wesentlichen dem Innendurchmesser der Form (1) gleich ist, und daß der hochstehende Rand (21) des Abschlußteils (20) in Fortsetzung der Außenwand (23) und die Außenwand (23) im wesentlichen tangential zur Krümmung (22) des konkav ausgebildeten hochstehenden Randes (21) verläuft.

3. Blasform nach Anspruch 1 oder 2, dadurch gekennzeichnet, daß die Längseinstellvorrichtung (24) mindestens eine Gewindespindel (25) und mindestens eine mit dem Träger (7) zusammenwirkende Stellmutter (27) aufweist.

4. Blasform nach Anspruch 3, dadurch gekennzeichnet, daß eine Mehrzahl von Gewindespindeln symmetrisch über das Abschlußteil (20) verteilt angeordnet ist.

5. Blasform nach einem der Ansprüche 3 oder 4, dadurch gekennzeichnet, daß die einteilige Form (1) an einem Ende an einer Trägerplatte (8) des Trägers (7), die mit Laufrädern (9) auf Schienen (10) läuft, verankert ist, daß die mindestens eine Gewindespindel (26) sich durch die Trägerplatte (8) hindurch erstreckt, und daß die zugehörige Stellmutter (27) an der Trägerplatte (8) auf der dem Abschlußteil (20) abgewandten Seite angreift.

## Claims

1. Blow mould for blow moulding containers, containing an undivided mould (1), an upper mould member (5) closing the mould (1) at a first end thereof for connection with a blow nozzle, a closure member (20) supported at a carrier (7) and closing the mould (1) at a second end located opposite to the first end, said closure member being axially movable relative to the undivided mould (1), and a longitudinal adjusting device (24) which engages the closure member (20) on the side remote from the upper mould member (5) and by means of which the closure member is adjustable to preselectable lengths of the undivided mould for blow moulding containers of different lengths, characterised in that the longitudinal adjusting device (24) is fixedly connected to the closure member (20) on the side remote from the upper mould member (5) and infinitely adjustably connected with the carrier (7), and that the closure member (20) is axially infinitely adjustable within the undivided mould (1) by means of the longitudinal adjusting device.

2. The blow mould according to claim 1, characterised in that the closure member (20) defines an outer wall (23), that the diameter of the outer wall (23) is substantially equal to the inner diameter of the mould (1), and that the upwardly protruding margin (21) of the closure member (20) extends in continuation of the outer wall (23) and the outer wall (23) extends substantially tangentially to the curvature (22) of the concavely configured upwardly protruding margin (21).

3. The blow mould according to claim 1 or 2, characterised in that the longitudinal adjusting device (24) comprises at least one threaded spindle (25) and at least one adjusting nut (27) cooperating with the carrier (7).

4. The blow mould according to claim 3, characterised in that a multiple number of threaded spindles is arranged in symmetric distribution over the closure member (20).

5. The blow mould according to any one of claims 3 or 4, characterised in that the undivided mould (1) at one end thereof is anchored at a carrier plate (8) of the carrier (7) and which carrier plate runs on rails (10) by means of running wheels (9), that the at least one threaded spindle (25) extends through the carrier plate (8), and that the associated adjusting nut (27) engages the carrier plate (8) on the side remote from the closure member (20).

## Revendications

1. Moule de soufflage destiné au moulage par soufflage de récipients, comprenant un moule (1) en une partie, une partie supérieure de moule (5) fermant le moule (1) à une première extrémité et destiné à être relié à un boulon de soufflage, un élément de fermeture (20) qui est supporté sur un support (7) fermant le moule (1) à une seconde extrémité en face de la première extrémité, et qui est axialement déplaçable relativement au moule (1) en une pièce, et un dispositif d'ajustement longitudinal (24) appliqué à l'élément de fermeture (20) sur le côté opposé à la partie supérieure de moule (5) et au moyen duquel l'élément de fermeture peut être ajusté à des longueurs présélectables du moule en une pièce pour le moulage par soufflage de récipients de longueurs différentes, caractérisé par le fait que le dispositif d'ajustement longitudinal (24) est fixement relié à l'élément de fermeture (20) sur le côté opposé à la partie supérieure de moule (5) et est relié de manière continuellement ajustable au support (7), et par le fait que l'élément de fermeture (20) est axialement continuellement ajustable à l'intérieur du moule (1) en une pièce au moyen du dispositif d'ajustement longitudinal (24).

2. Moule de soufflage selon la revendication 1, caractérisé par le fait que l'élément de fermeture (20) forme une paroi extérieure (23), que le diamètre de la paroi extérieure (23) est essentiellement égale au diamètre intérieur du moule (1) et que le bord (21) saillant vers le haut de l'élément de fermeture (20) fait suite à la paroi extérieure (23), et la paroi extérieure (23) s'étend essentiellement tangentiellement à la courbure (22) du bord concave (21) saillant vers le haut.

3. Moule de soufflage selon la revendication 1 ou 2, caractérisé par le fait que le dispositif d'ajustement longitudinal (24) présente au moins une broche filetée (25) et au moins un écrou de réglage (27) coopérant avec le support (7).

4. Moule de soufflage selon la revendication 3, caractérisé par le fait qu'une pluralité de broches filetées est disposée de manière symétriquement répartie sur l'élément de fermeture (20).

5. Moule de soufflage selon l'une des revendications 3 ou 4, caractérisé par le fait que le moule (1) en une pièce est ancré à une extrémité à une plaque de support (8) du support (7), la plaque de support roulant avec des roues de roulement (9) sur des rails (10), par le fait que la ou les broches filetées (26) s'étendent par la plaque de support (8), et par le fait que l'écrou de réglage associé (27) est appliqué à la plaque de support (8) sur le côté opposé à l'élément de fermeture (20).

EP 0 253 819 B1